(19) Europäisches Patentamt
European Patent Office
Office européen des brevets

(11) Publication number: 0 524 702 B1

## EUROPEAN PATENT SPECIFICATION

(45) Date of publication of patent specification: 23.08.95    (51) Int. Cl.⁶: **B60C 9/22**

(21) Application number: **92202997.0**

(22) Date of filing: **17.06.88**

(60) Publication number of the earlier application in accordance with Art.76 EPC: **0 319 588**

(54) **Pneumatic radial tyre.**

(30) Priority: **18.06.87 JP 151987/87**
**03.07.87 JP 167435/87**
**31.07.87 JP 193523/87**
**29.09.87 JP 244775/87**
**31.03.88 JP 80495/88**
**06.04.88 JP 85671/88**

(43) Date of publication of application:
**27.01.93 Bulletin 93/04**

(45) Publication of the grant of the patent:
**23.08.95 Bulletin 95/34**

(84) Designated Contracting States:
**DE FR GB IT**

(56) References cited:
**FR-A- 2 141 834**
**GB-A- 2 061 202**
**LU-A- 85 964**

**PATENT ABSTRACTS OF JAPAN vol. 012, no. 126 (M-687)19 April 1988 & JP-A-62 251 203 (BRIDGESTONE)**

(73) Proprietor: **SUMITOMO RUBBER INDUSTRIES LIMITED**
**No. 1-1, Tsutsui-cho 1-chome**
**Chuo-ku**
**Kobe-shi**
**Hyogo 651 (JP)**

(72) Inventor: **Kojima, Yoshihide**
**3-21, Hikarigaoka 2-chome**
**Takarazuka-shi,**
**Hyogo 665 (JP)**
Inventor: **Takami, Masao, Daiapalesu-Toyota-Kosakaoka 107**
**15-17 Kosakaoka-cho,**
**Toyota-shi**
**Aiichi-ken (JP)**
Inventor: **Sakuno, Hiroaki, 1-44**
**Miyakobashiyama**
**Ooaza-izumizaki,**
**Izumizaki-mura**
**Nishi-shirakawa-gun,**
**Fukushima-ken (JP)**
Inventor: **Miyanaga, Yoshinobu**
**16-8 Misaka 2-chome**
**Shirakawa-shi,**
**Fukushima-ken (JP)**

Inventor: **Kadowaki, Katsunori**
**6-18, Takenodai 5-chome,**
**Nishi-ku**
**Kobe-shi,**
**Hyogo 673 (JP)**

(74) Representative: **Stewart, Charles Geoffrey**
**SP TYRES UK LIMITED**
**Technical Division**
**Fort Dunlop,**
**Erdington,**
**Birmingham B24 9QT (GB)**

**Description**

This invention relates to a pneumatic radial tyre having a band reinforcing the belt or breaker.

Pneumatic radial tyres having a belt of layers of metal cords reinforcing the tread portion have been conventionally used on high performance cars, and high speed durability, high speed driving stability and steerability have been obtained by means of the strong hoop effect of the belt in the overall tyre structure. The conventional maximum speed of cars of 100 to 200 km/h has however, been changed by vehicle developments and now some passenger cars may travel at 200 km/h or more, and sometimes at 300 km/h. In the field of racing cars, vehicles capable of such speeds already exist, but their driving is only in special conditions so that the tyres may be designed sacrificing some of the performance characteristics required in ordinary driving, for example, wear resistance and fuel economy. They are thus unsuitable to withstand general use on public roads.

If radial tyres having a conventional metal cord belt reinforcement are used at the high speeds mentioned above, their tread portions are deformed by centrifugal force and repeated distortions are generated in the tread portion. This deformation appears in various phenomena depending on the size, structure and materials of the tyre and may be, for example, a lifting phenomenon in which the outer diameter at the shoulder portion increases, a phenomenon in which the outer diameter in the centre portion increases and the radius of curvature of the tread decreases or the surface becomes an irregular curve, or a standing wave phenomenon.

These effects generate heat by repeated distortions in the tread and the temperature in the tread portions rapidly rise and the adhesion between the metallic cord surfaces and the rubber in the belt may fail and cause so called ply separation. In particular, tyres used in high speed driving as described above require a broad ground contact area to secure enough grip on the road surface and, therefore a flattened tyre having a wide tread is employed. In such wide profile flattened tyres since the size of the tread portion in the entire tyre is large, the above mentioned phenomena of deformation and heat generation tend to occur to a wide extent.

Use of a rubber with a small loss tangent (tan $\delta$) is one effective means to decrease the heat generation, but when a rubber with a small loss tangent (tan $\delta$) is employed, the tread grip lowers and therefore the required high speed tyre performance properties are hard to obtain.

Alternatively, a decrease of the deformation of the tread portion without changing the formulation of the tread rubber can be achieved by increasing the hoop effect of the belt, but then the number of metal cord plies of the belt is increased and the weight of the tyre increases thus causing other adverse effects on the high speed properties of the tyre and a car using the tyre.

To solve these problems, it has been proposed to arrange a band comprising a multiplicity of independent cords embedded in rubber and parallel with each other in the circumferential direction of the tyre as disclosed in Japanese Patent Publication Kokai No. 47-14805, and Japanese Patent Publication Kokoku No. 55-45402. This band or bandage however, has at least one joint portion extending in the widthwise direction. The stiffness in the circumferential direction changes and usually decreases at this joint portion and the resultant large distortion tends to induce breakage. In addition, the joint portion may impair the uniformity of the tyre.

Accordingly, such a band is not good enough for use in the high speed ranges described above. A tyre having such a band is fine in ordinary speed ranges but in a speed range of more than 200 km/h or more than 300 km/h, it is impossible to prevent the deformation caused by the centrifugal force on the tread portion and insufficient durability is obtained.

It is hence an object of this invention to provide a tyre having a structure capable of withstanding use in these high speed ranges without sacrificing other general performance properties. Another proposal to solve the above problems provides a jointless band formed by winding one or a plurality of organic fibre cords spirally over the belt parallel to the central circumferential line of the tyre to produce band in which the densities of spirally wound cord are different between the crown and shoulder portions of the tyre so as to enhance performance. This is disclosed in Japanese Patent Publication Kokoku No. 44-17801 and Japanese Patent Publication Kokoku No. 57-61601, However, such a means has the problem that it takes much time to wind the cord and so productivity is inferior, and since the wound cord becomes asymmetrical in the section of the tyre, the uniformity properties such as **conicity** are poor. Furthermore, with a changing cord density, if the density is set too high, the cord surfaces contact each other, which may induce breakage at these points.

It is hence another object of this invention to provide a radial tyre having a superior uniformity and excellent productivity in which breakages in the shoulder portion of the belt due to lifting in driving are prevented and contact between cord surfaces is inhibited.

A tyre having improved uniformity is shown in LU-A-85964, which corresponds to the preamble of claim 1.

It is the main object of this invention to provide an assembly of belt, band and tread rubber which can improve the high speed durability of the radial tyre as mentioned above.

The present invention provides a pneumatic radial tyre comprising a pair of bead cores disposed in bead portions of the tyre, a carcass having at least one ply of radially arranged cords turned up around said bead cores, a tread portion over said carcass, a belt arranged on the radially outer side of said carcass beneath the treads and having at least two plies of metal cords arranged at an angle of 10 to 30 degrees to the circumferential direction, and a band located on the radially outer side of said belt characterised in that the band comprises one or more continuous organic fibre cords embedded in a rubber and formed into a tape and spirally wound substantially parallel to the circumferential direction of the tyre and the band is folded back at both edges and comprises a full band layer extending over the entire width of the belt and a pair of edge band layers arranged one near each edge portions of said belt and the width of each of the edge band layers in the axial direction of the tyre is in the range of 20 to 30% of the width of said full band layer in the axial direction of the tyre.

Further aspects of the invention will be apparent from the following descriptions of some embodiments in conjunction with the attached diagrammatic drawings in which:

Fig.1 is a sectional view showing a first embodiment of the pneumatic radial tyre of this invention:

Fig.2 is a perspective view showing an arrangement of a belt, a band and a tread rubber in another embodiment

Fig.3 is a perspective view showing schematically the state of the winding of a cord of the band

Fig.4 is a view showing an instance of the relationship between the ratio of the width of the edge band layer to the width of the full band layer and the rate of breakage of a tyre

Fig.5 is a perspective view showing cords formed into a tape

Fig.6 is a perspective view showing a single coated cord

Fig.7 is a perspective view showing a non coated cord

Fig.8 is a sectional view of a method for producing radial tyres of this invention.

Figs.9 and 10 are views showing a manner of winding a cord for forming a band of symmetrical structure.

Fig.11 is a view showing a manner of winding or provide an asymmetrical structure.

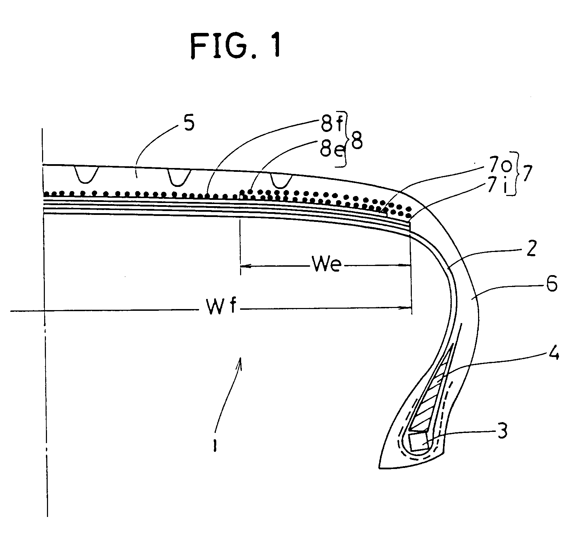

In Fig 1 a tyre 1 comprises a pair of bead cores 3, a pair of apexes 4, a carcass 2, annular tread 5, a pair of sidewalls 6, a belt 7, and a band 8.

The bead cores 3 are arranged in the bead portions of the tyre. The bead apexes 4 are made of hard rubber and disposed outside the bead cores 3 with respect to the radial direction of the tyre 1. The carcass 2 comprises a ply of cords arranged in the radial direction of the tyre, and turned up around the bead cores 3.

The carcass 2 may comprise one or a plurality of plies.

The belt 7 is arranged on the shoulder outer side of the carcass 2 and comprises two or more plies of fabric of metal cords. In this embodiment, it is composed of an inner ply 7i and an outer ply 7o, but one or two other plies may be interposed between them. In the drawing, the inner ply 7i has a larger width than the outer ply 7o but it does not matter if the outer ply is the wider. If the two plies have the same width, however, the bending stiffness in the section varies drastically at the edges, which makes an adverse effect on the durability, so that it is necessary to make these plies (7i & 7o) of different widths.

The metal cords of the belt plies 7o, 7i are arranged at an angle of 10 to 30 degrees with regard to the equatorial line of the tyre.

The band 8 is located on the radially outer side of the belt 7. The band comprises a full band layer 8f and a pair of edge band layers 8e.

The full band layer 8f is disposed over the full width of the belt 7, that is, over the full width of the inner ply 7i which is the wider ply. Each edge band layer 8e is arranged between the full band layer 8f and the belt 7 or between the full band layer 8f and the annular tread 5 in the region near the belt edge.

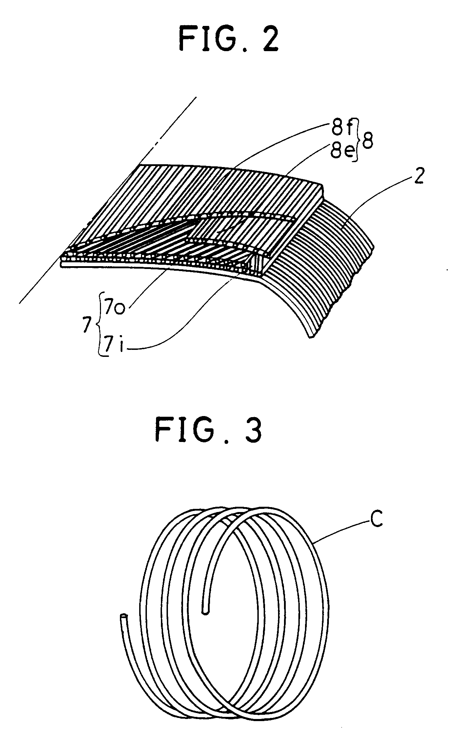

Fig.2 is a perspective view showing the arrangement of the carcass 2, belt 7 and band 8 in the case where the disposition of the edge band layers 8e and full band layer 8f is reversed.

It is preferable to match the edges of the full band layer 8f, edge band layers 8e and the inner ply 7i of the belt. Where the edges of the full band layer 8f and the edge band layer 8e are located inwardly from the belt edge, the lifting described above is difficult to stop and even if they are located outside the belt edge position, no real effect is obtained.

Moreover, extra material is required for the extra portion and since organic fibre cord must be wound onto the rubber member in an area where no metal cord is present, it induces a problem in maintaining the uniformity of cord tension and the cord position in the manufacturing process.

The ratio We/Wf of the width We of the edge band layer 8e measured in the axial direction of the tyre to the width Wf of the full band layer 8f measured in the axial direction of the tyre is set in the range of 0.2 to 0.3. When the ratio We/Wf is less than 0.2, the tyre durability drops down sharply. On the other hand, even if We/Wf exceeds 0.3, no further improvement in durability is found. Also, it has been found that a tyre in which We/Wf is larger than 0.3, tends to give poor vehicle control because the stiffness of the entire tread portion is too great.

Thus it is necessary for the value We/Wf to be within the range of 0.2 to 0.3.

The edge band layers 8e and full band layer 8f are composed of organic fibre cords substantially parallel to the equatorial centre line of the tyre. The organic fibre cord C is a single long cord composed of a multiplicity of single yarns or twisted yarns such as spun yarn, monofilament yarn or multifilament yarn or organic fibre made of nylon 66, nylon 6, polyester, Kevlar or the like.

The cord C is formed of one or more cords wound spirally in the circumferential direction of the tyre in each layer as shown schematically in Fig.3.

Consequently, conventional joints no longer exist in each layer and the troubles caused by the existence of joints are completely avoided. In the conventional joint, both ends in the circumferential direction of each layer are commonly made to contact each other end to end, so that this portion cannot endure a large tension in the circumferential direction. It therefore often induces breakage in high speed use. The joint portions also spoil the uniformity of the tyre.

The tyre of this invention can be produced by either (a) a method comprising the steps of winding a belt 7 on a belt drum and then spirally and continuously winding a rubberised organic fibre cord onto the belt 7 to form a band 8, winding a tread 5 on the band 8, thus forming an annular assembly positioning thus annular assembly around a tyre forming drum, and adhering a separately formed tyre carcass to this assembly by shaping it or (b) a method of winding the belt (7) band (8) and tread 5 directly onto a tyre carcass which has been assembled and shaped up ready for said components.

In winding the organic fibre cord C, it is acceptable to wind several cords, e.g. 2 or 3 cords, with guidance to maintain alignment or to wind only one cord.

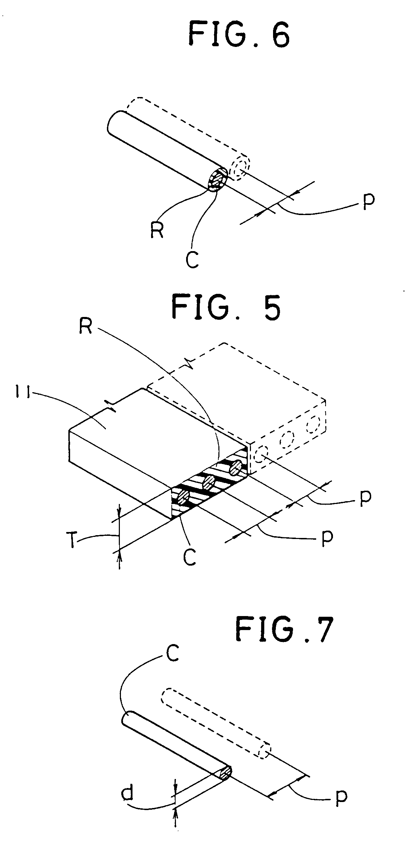

Fig.5 shows cords in which several cords are aligned and combined into one body by coating with rubber R and forming a tape shape (belt or ribbon like body). If a plurality of cords are arranged and united in a body like this it becomes easy to accurately set a pitch p between the cords. This tape like body can be easily formed by an extruding machine or a profile calender. In the case of a ribbon, it is preferably from the viewpoint of uniformity of the tyre to set the number of cords to such an extent that the angles of the wound cords to the circumferential direction may not exceed 0 degrees by much. Here, the drawing shows a tape like body 11 composed of three cords, but the number of cords may be selected in a range not exceeding 10 or in a preferred tape 5.

When embedding several cords in the coating rubber, the amount of rubber contained in one pitch is expressed by the equation.

$$T \times p - \pi \times d^2/4$$

Where T indicates the thickness of the tape like body.

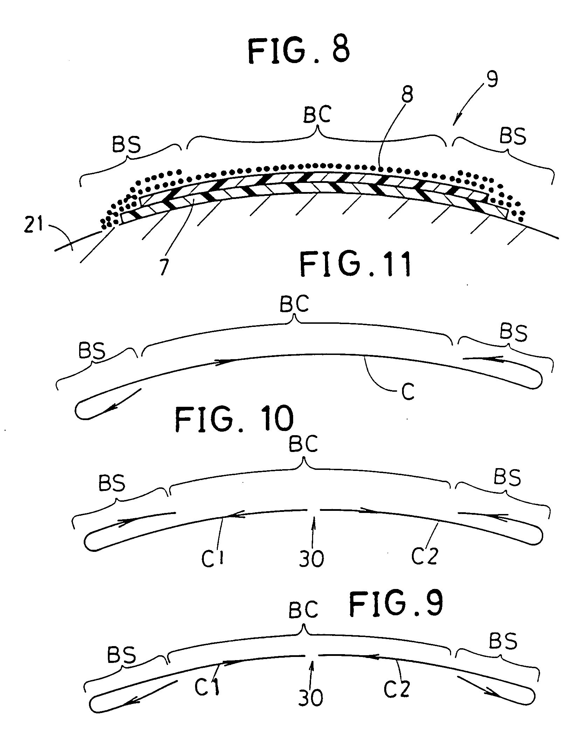

In the case of winding a single organic fibre cord, preferably the cord is previously covered with a coating rubber R as shown in Fig.8. The thickness t of this coating rubber should satisfy the relation.

$$0.1 \text{ mm} \leq t \leq 0.2 \text{ mm}$$

The diameter d of the organic fibre cord C is set so that the pitch p which is the distance between the centres of the cords becomes:

$$p = d + 2t$$

The diameter d is measured by the method specified in JIS L 1017. The amount of rubber contained in one pitch is

$$(p^2 - d^2) \times \pi/4$$

and when T = p, the band is short of rubber in an amount expressed by:

$$(p^2 - \pi \times d^2/4) - \pi \times (p^2 - d^2)/4 = (1 - \tfrac{\pi}{4}) \times p^2$$

The shortage of rubber induces corrugations on the band surface in the finished tyre. If the corrugations are large, an adverse effect is given on durability.

The present inventors made a test changing the thickness of the rubber applied to organic fibre cords, and as a result, they have found that a sufficient durability is obtained when the rubber thickness t is 0.1 mm or more. Also if the rubber thickness t exceeds 0.2mm the pitch p becomes so large that the organic fibre cords may be insufficient and thus sufficient tread stiffness cannot be obtained.

The diameter d of the above cords, meanwhile, is determined by the strength required in preventing the lifting and it is, for example,

$$0.5\text{mm} \leq d \leq 1.5\text{mm}$$

Also, the thickness t of the rubber coating is determined by the necessary durability and it is, for example,

**$0.05\text{mm} \leq t \leq 0.8\text{mm}$ or more preferably,
$0.1\text{mm} \leq t \leq 0.2\text{mm}$ as mentioned above**.

For the coating rubber R, the same or equivalent rubbers as those used as a coating rubber for conventional bands (nylon band having a joint portion extending in the widthwise direction) can be employed, for example, a rubber compound mainly composed of natural rubber, a blend of natural rubber and SBR, and other rubbers which have a good adhesion to the cords.

When winding the above mentioned organic fibre cords, a tension is applied to the cords. This winding tension may be uniform in the widthwise direction of the belt but preferably the cords are wound so that the cord tension after vulcanisation of the tyre becomes uniform across the entire width of the belt, or so that the winding tension of the cord becomes greatest at the shoulder portions of the belt and is smallest at the centre portion so as to make the elongation of the cord at a given load small at the shoulder portions of the belt and large at its centre portion. By this means the necessary stiffness at the tread portion with the necessary distribution throughout the section of the tyre can be obtained without changing the density of the cords. Moreover, the high speed durability of the finished tyre can be further enhanced. In this case, the value of winding tension can be arbitrarily selected depending on the size and structure of the tyre, but if it is set so as to be a minimum at the crown portion of the tyre and to gradually increase toward the shoulder portions to reach a maximum at the shoulder portions of the belt, the cord tension of the band in the vulcanised tyre becomes more uniform over the entire width of the belt. Besides, if the increment of the winding tension at that time is set at a value necessary for giving an elongation corresponding to the differences of the outer diameters between the crown portions and other portions of the band in the finished tyre. A uniform stiffness in the circumferential direction can be obtained.

For instance, when using nylon 66 1260 D/2 as the organic fibre cord, the winding tension is set at a minimum in the crown portion of 20 g, and is gradually increased towards the shoulder portions to reach a maximum at the shoulder portions of 40 g. When done in this way, the cord tension of the band in the vulcanised tyre becomes uniform over the entire width at 50g.

Similar effects can be obtained by setting the winding tension constant and gradually increasing the cord winding diameter from the crown portion toward the shoulder portions. Then using nylon 66 1260 d/2 as the organic fibre cord, it is preferable to set the winding tension constant in the range of 30 g to 50 g.

Also, the organic fibre cord C is preferably wound so that the radius of curvature of the section of the band upon forming coincides with the radius of curvature of the band in the finished tyre, so that the difference between the stretch at the centre of the band and the stretch at the shoulder portions is less than 2% (this will later be explained in more detail in the method for forming an assembly of belt, band and tread rubber). By doing so, the residual elongation or thermal shrinking force of the organic fibre cord of the band in the finished tyre becomes uniform between the centre portion and the shoulder portions or becomes higher in the shoulder portions, thus loss of the hoop effect of the band in the shoulder portions of the belt can be prevented.

Fig.8 is a sectional view showing the winding process for an organic fibre cord in manufacturing process of the tyre. Figs.9 to 11 are sketches showing the method of winding.

Fig.8 shows a band composed of a combination of a full band layer and edge band layers. In this band, the number of cords per unit length (density) cord size and pitch can be changed as occasion demands.

In any case, winding is conducted so as to be symmetrical in structure with regard to the tyre equatorial plane in the same way as described above. That is, in the case of a structure having two layers at portions BS and one layer at portion BC, there are methods such as winding cords C1 and C2 from the centre position 30 towards both sides symmetrically and folding them over at both edges as shown in Fig.10, or starting the winding from portion BC and folding it over to return to the centre as shown in Fig.9. Also, Fig.11 shows a way of winding asymmetrically.

Sample tyres of size 255/40VR17 were produced and tested. These test tyres had the sectional structure shown in Fig 1 and the following basic structure except for the band structure their construction were identical.

| Basic structure | |
|---|---|
| Belt material | Metallic cord |
| Number of belts | 2 plies |
| Belt angles | 24 degrees |
| Carcass material | Polyester |
| Band material | Nylon 66 1260 d/2 (by single winding) |

The test was an indoor durability test using an indoor bench tester, in which test tyres having various values of We/Wf from 0 (that is, without any edge band layer) to 0.45 were driven for 20 minutes at prescribed speeds stepping up the speed at 10 km/h increments under the conditions of standard internal pressure and load, and the speed at which each tyre was broken (hereinafter referred to as breaking speed) was measured.

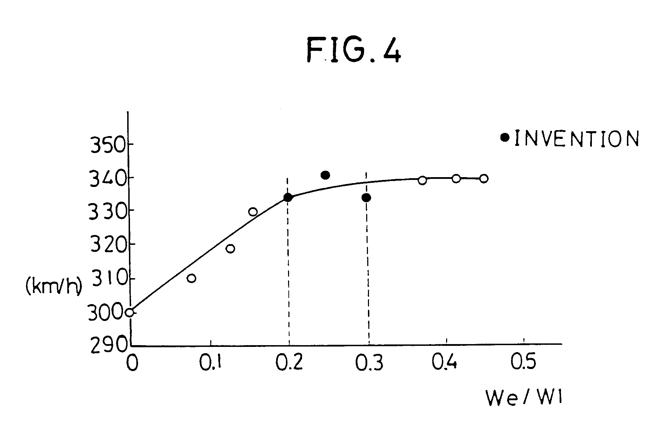

Fig.4 is a graph showing the results, in which the axis of ordinates indicates the breaking speed, and the axis of the abscissas denotes the value We/Wf.

It was found from the graph that the breaking speed drastically falls when We/Wf is smaller than 0.2 and that the breaking speeds does not further rise when We/Wf exceeds 0.3. It was also found that tyres having a value We/Wf of more than 0.3 tend to give poor vehicle control in an actual car test because the stiffness of the entire tread portion becomes too high.

This invention is applicable to radial tyres having various structures, tread patterns and tyre sizes, and in particular this invention is effectively applicable to flattened tyres for high speed running.

**Claims**

1. A pneumatic radial tyre comprising a pair of bead cores (3) disposed in bead portions of the tyre, a carcass (2) having at least one ply of radially arranged cords turned up around said bead cores (3), a tread portion (5) over said carcass, a belt (7) arranged on the radially outer side of said carcass (2) beneath the tread and having at least two plies (7o, 7i,) of metal cords arranged at an angle of 10 to 30 degrees to the circumferential direction, and a band (8) located on the radially outer side of said belt (7) the band (8) comprising one or more continuous organic fibre cords embedded in a rubber and formed into a tape and spirally wound substantially parallel to the circumferential direction of the tyre, characterised in that the band (8) is folded back at both edges and comprises a full band layer (8f) extending over the entire width of the belt (7) and a pair of edge band layers (8e) arranged one near each edge portions of said belt (7) and the width (We) of each of the edge band layers (8e) in the axial direction of the tyre is in the range of 20 to 30% of the width (Wf) of said full band layer (8f) in the axial direction of the tyre.

**Patentansprüche**

1. Ein pneumatischer Radialreifen mit einem Paar von Wulstkernen (3), die in Wulstteilstücken des Reifens angeordnet sind, einer Karkasse (2) mit mindestens einer Lage von radial angeordneten Korden, die um die Wulstkerne (3) herum nach oben gebogen sind, einem Laufflächenteilstück (5) über der Karkasse, einem Gürtel (7), der auf der radial äußeren Seite der Karkasse (2) unter der Lauffläche angeordnet ist und mindestens zwei Lagen (7o, 7i) von Metallkorden aufweist, die unter einem Winkel von 10 bis 30 Grad zu der Umfangsrichtung angeordnet sind, und einem Band (8), das auf der radial äußeren Seite des Gürtels (7) angeordnet ist, wobei das Band (8) einen oder mehr fortlaufende organische Faserkorde enthält, die in einem Gummi eingebettet und zu einem Band geformt sind und im wesentlichen parallel zu der Umfangsrichtung des Reifens spiralförmig gewickelt sind, dadurch gekennzeichnet daß das Band (8) bei beiden Rändern zurückgefaltet ist und eine vollständige Bandschicht (8f), die sich über die gesamte Breite des Gürtels (7) erstreckt, und ein Paar von Randbandschichten (8e) enthält, wobei eine nahe jedes Randteilstücks des Gürtels (7) angeordnet ist, und die Breite (We) von jeder der Randbandschichten (8e) in der axialen Richtung des Reifens in dem Bereich von 20 bis 30 % der Breite (Wf) der vollständigen Bandschicht (8f) in der axialen Richtung des Reifens liegt.

**Revendications**

1. Pneumatique à carcasse radiale comprenant une paire de tringles (3) disposées dans des parties de talon du pneumatique, une carcasse (2) ayant au moins une nappe de câblés disposée radialement et repliée autour des tringles (3), une partie (5) de bande de roulement placée sur la carcasse, une ceinture (7) placée à la face radialement externe de la carcasse (2) sous la bande de roulement et ayant au moins deux nappes (7o, 7i) de câblés métalliques formant un angle de 10 à 30° par rapport à la direction circonférentielle, et un bandage (8) placé à la face radialement externe de la ceinture (7), le bandage (8) comprenant un ou plusieurs câblés continus de fibres organiques enrobés dans un caoutchouc et mis sous forme d'un ruban, enroulés en spirale en direction pratiquement parallèle à la direction circonférentielle du pneumatique, caractérisé en ce que le bandage (8) est replié aux deux bords et comporte une couche complète (8f) de bandage disposée sur toute la largeur de la ceinture (7) et une paire de couches latérales (8e) de bandage placées chacune près d'une partie de bord de la ceinture (7) et la largeur (We) de chacune des couches latérales (8e) de bandage dans la direction axiale du pneumatique est comprise entre 20 et 30 % de la largeur (Wf) de la couche complète (8f) de bandage dans la direction axiale du pneumatique.

# FIG. 1

# FIG. 2

# FIG. 3

# FIG.4

# FIG. 6

R

C

P

# FIG. 5

R

II

T

C

P

P

# FIG.7

C

d

P

# FIG.8

# FIG.11

# FIG.10

# FIG.9